(19) Europäisches Patentamt
European Patent Office
Office européen des brevets

(11) Publication number: 0 076 513 B1

(12) **EUROPEAN PATENT SPECIFICATION**

(45) Date of publication of patent specification: 20.08.86

(51) Int. Cl.[4]: G 02 B 6/38

(21) Application number: 82109191.5

(22) Date of filing: 05.10.82

# (54) Optical connector.

(30) Priority: 06.10.81 JP 159768/81

(43) Date of publication of application: 13.04.83 Bulletin 83/15

(45) Publication of the grant of the patent: 20.08.86 Bulletin 86/34

(84) Designated Contracting States: DE FR GB IT

(56) References cited:
US-A-3 999 837
US-A-4 167 303
US-A-4 213 671

(73) Proprietor: TOYOTA JIDOSHA KABUSHIKI KAISHA
1, Toyota-cho Toyota-shi
Aichi-ken 471 (JP)

(73) Proprietor: SUMITOMO ELECTRIC INDUSTRIES LIMITED
No. 15, Kitahama 5-chome Higashi-ku
Osaka-shi Osaka 541 (JP)

(72) Inventor: Moriyama, Masakazu
10, Toyota-cho Toyota-shi
Aichi (JP)
Inventor: Shinohara, Toshio
49-11, 5-chome, Kosaka-cho Toyota-shi
Aichi (JP)
Inventor: Hayashi, Kyozo
Osaka-Works Sumitomo Electric Ind. Ltd.
1-3, Shimaya 1-chome Konohana-ku Osaka (JP)
Inventor: Fujii, Koji
Osaka-Works Sumitomo Electric Ind. Ltd.
1-3, Shimaya 1-chome Konohana-ku Osaka (JP)
Inventor: Sakamoto, Fukuma
Osaka-Works Sumitomo Electric Ind. Ltd.
1-3, Shimaya 1-chome Konohana-ku Osaka (JP)

(74) Representative: Glawe, Delfs, Moll & Partner
Patentanwälte
Rothenbaumchaussee 58 Postfach 2570
D-2000 Hamburg 13 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 076 513 B1

Courier Press, Leamington Spa, England.

**Description**

The present invention relates to an optical connector comprising a tubular housing and a cover connectable with said housing for covering one end of said housing, said cover being formed with at least one hole through which an optical fiber cable having a plug attached to one end thereof passes, said cover being formed with at least one slot extending from the outer periphery of the cover to said hole.

Fig. 3 is an exploded perspective view of a conventional optical connector. The optical connector is composed of a tubular housing 31 and a cover 32. Plugs 33 and springs 34 are contained in the housing. Two optical fiber cables 35 are passed through holes 36 of the cover 32 into the plugs 33 and bonded to their inner wall. The plugs 33 thus secured to the ends of the optical fiber cables are in turn introduced into an opening 37 in the housing 31.

On its front surface the cover 32 is formed with extension members 38 in parallel with each other and each having a jaw 39 disposed at its tip and being at a right angle to its axis. The housing 31 is formed with projections 40 on the outer wall thereof. When the jaws 39 are engaged onto the projections 40, the housing 31 is coupled with the cover 32.

The spring 34 held between the flange portion 41 and the cover 32 will urge the plug 83 forwardly.

If the diameter of the hole is expressed as A, the spring's diameter as B and the diameter of flange portion as C, the following relationship is required in order that the spring 34 properly functions between the cover 32 and the flange portion 41.

$$A<B<C \qquad (1)$$

If A>B, the spring 34 would slip through the hole 36.

The spring and the flange portion can not be passed through the hole. Hence, only after the cable 35 has been passed through the hole 36, the spring 34 is mounted on the cable, and then the jacket covering the end of the cable is peeled off, and the cable is secured to the plug. However, with the cover mounted on the optical fiber cables, it may be obstructive to the working on the ends of the cables. In particular, if the freely movable portion of the cable is short, the cover mounted on the optical fiber cables will decrease the efficiency in the plug fitting operation. Moreover, even if only the cover suffers damage, it cannot be replaced because the plugs cannot be removed from the cover.

To avoid this deficiency it is known from US—A—4 167 303 to provide said cover with at least one slot extending from the outer periphery of the cover to said hole. This slot enables the optical fiber with the plug already attached thereto to pass through the hole.

The present invention has for an object to provide an improved optical connector which is characterized in that said housing is formed with at least one projection on its surface facing said cover, said projection fitting into said slot when said housing and said cover are coupled with each other and that said housing is formed with further projections on its surface facing said cover, said further projections fitting into corresponding holes in said cover when said housing and said cover are connected.

The arrangement, actions and effects according to the present invention will now be described with reference to the accompanying drawings, in which:

Fig. 1 is an exploded perspective view of the optical connector embodying the present invention;

Fig. 2 is a vertical sectional view of the same showing the cable with the plug; and

Fig. 3 is an exploded perspective view of a conventional optical connector.

A housing 1 (Fig. 1), is a tubular body which can hold a pair of plugs therein. A cover 2 serves to cover the rear end of the housing 1. The plugs 3 are so adapted as to protrude forwardly of a partition plate 5 through a hole 4 bored therethrough.

Springs 6 mounted on the rear half of the plugs 3 are accommodated in the housing 1, compressed between the cover 2 and flange portions 7 of the plugs.

Each optical fiber cable 8 is introduced into the plug 3 through an opening at its rear end. The cover 2 is formed with a flange portion 9 and a pair of holes 10 extending axially.

The optical connector according to the present invention is characterized in that slots 11 are provided in the cover 2, extending from its periphery to the holes 10.

If the width of the slots 11 is called D and the outer diameter of the optical fiber cable 8 is called E, the relationship between D and E can be expressed as follows:

$$D>E \qquad (2)$$

In the present invention, because the slots 11 are formed in the cover 2, the optical fiber cables 8 do not have to be passed through the holes 10 in the cover 2 any more before the plugs are secured to their ends.

Firstly the spring may be slid over the free end of each optical fiber cable 8 and the plug be attached thereto. The optical fiber cable 8 having the spring and plug attached thereto is put into the hole 10 through the slot 11 in the cover 2 at the narrower cable portion (of a diameter E) thereof. Then the cable is pulled back until the plug is passed through the hole 10. The cover 2 is then pushed into the housing 1 so that these two will be combined into one.

Means for connecting the cover 2 to the housing 1 may be optionally selected; these two components may be permanently fixed to each other by means of an adhesive, hot calking, supersonic welding, etc. They may also be separably fixed by screws. In the present embodiment, nails adapted to engage projections are used.

The housing 1 is provided on the upper and lower inner surfaces with two projections 12, while the cover 2 is formed on its front with two locking pieces 13 which are in the form of ⊓ and are spaced vertically. They extend in parallel with each other and have a crossbar 14 at their tip.

Furthermore, the housing has a pair of projections 15 extending from its rear surface, and the cover 2 is provided with holes 16 to receive the projections 15.

The cover 2 is pushed into the housing 1, so that the projections 15 will be inserted into the respective holes 16. Further pushing of the cover 2 allows the upper and lower crossbars 14 to slide past the projections 12 and engage thereon.

Thus, the housing 1 and the cover 2 are coupled with each other. At the same time, projections 17 disposed on the back of the housing fit into the slots 11 in the cover 2, thereby filling them.

The above-mentioned embodiment is a male optical connector designed to connect a pair of optical fiber cables with other cables or elements. The male optical connector is the type of connector that has the plugs and other elements protruding in the housing. In Fig. 2, the plug 3 protrudes outwardly through the opening 4 of the partition 5, so that the plugs can be introduced into a front opening in a female connector (not shown). The male and female connectors are coupled together by an engaging piece 18.

However, the present invention may be also applied to a male optical connector for a single optical cable as well as to a female optical connector. In short, the present invention can be applied to any type of optical connector comprising a housing and a cover. The latter two may be coupled together by any means. The present invention is also applicable to an optical connector with no spring in the housing.

As described above in detail, the optical connector according to the present invention is provided with a slot or slots which extends from the periphery of the cover to the hole 10, whereby an optical fiber cable in a free state may be attached to the plug. This increases the efficiency in operation and makes possible the replacement of the cover alone.

The slots may extend from bottom or sides instead of from top so long as they reach the hole 10.

## Claim

1. An optical connector comprising a tubular housing (1) and a cover (2) connectable with said housing for covering one end of said housing, said cover being formed with at least one hole (10) through which an optical fiber cable (8) having a plug attached to one end thereof passes, said cover (2) being formed with at least one slot (11) extending from the outer periphery of the cover to said hole (10), characterized in that said housing is formed with at least one projection (17) on its surface facing said cover, said projection (17) fitting into said slot (11) when said housing (1) and said cover (2) are connected with each other and that said housing if formed with further projections (15) on its surface facing said cover, said further projections fitting into corresponding holes (16) in said cover when said housing and said cover are connected.

## Patentanspruch

1. Optisches Verbindungsstück mit einem röhrenförmigen Gehäuse (1) und einer Abdekkung (2), die zum Abdecken eines Endes des Gehäuses mit dem Gehäuse verbindbar ist, wobei die Abdeckung mit zumindest einer Bohrung (10) ausgestaltet ist, durch welche ein Lichtleiter geführt wird, der an seinem einen Ende mit einem Stecker versehen ist, wobei die Abdeckung (2) mit zumindest einem sich vom Umfang der Abdekkung zu der Bohrung (10) erstreckenden Schlitz (11) ausgeführt ist, dadurch gekennzeichnet, daß das Gehäuse zumindest einen Vorsprung (17) auf seiner Oberfläche in Richtung auf die Abdeckung aufweist, daß dieser Vorsprung (17) in den Schlitz (11) paßt, wenn das Gehäuse (1) und die Abdekkung (2) miteinander verbunden werden und daß das Gehäuse weitere Vorsprünge (15) auf seiner Oberfläche in Richtung auf die Abdeckung aufweist und die weiteren Vorsprünge in entsprechende Bohrungen (16) in der Abdeckung passen, wenn das Gehäuse und die Abdeckung miteinander verbunden werden.

## Revendication

1. Connecteur optique comprenant un boîtier tubulaire (1) et un couvercle (2) qui peut s'accoupler au boîtier pour recouvrir une extrémité dudit boîtier ledit couvercle comportant au moins un trou (10) à travers lequel passe un câble à fibre optique (8) à une extrémité duquel est fixée une broche, ledit couvercle (2) comportant au moins une fente (11) qui s'étend de la périphérie extérieure du couvercle au dit trou (10), caractérisé en ce que le boîtier comporte au moins une saillie (17) sur sa surface tournée vers le couvercle, cette saillie (17) s'ajustant dans le fente (11) lorsque le boîtier (1) et le couvercle (2) sont mutuellement accouplés, et en ce que le boîtier comporte des tenons (15) sur sa surface tournée vers le couvercle, ces tenons s'ajustant dans des trous correspondants (16) ménagés dans le couvercle, lorsque le boîtier et le couvercle sont accouplés.

FIG.1

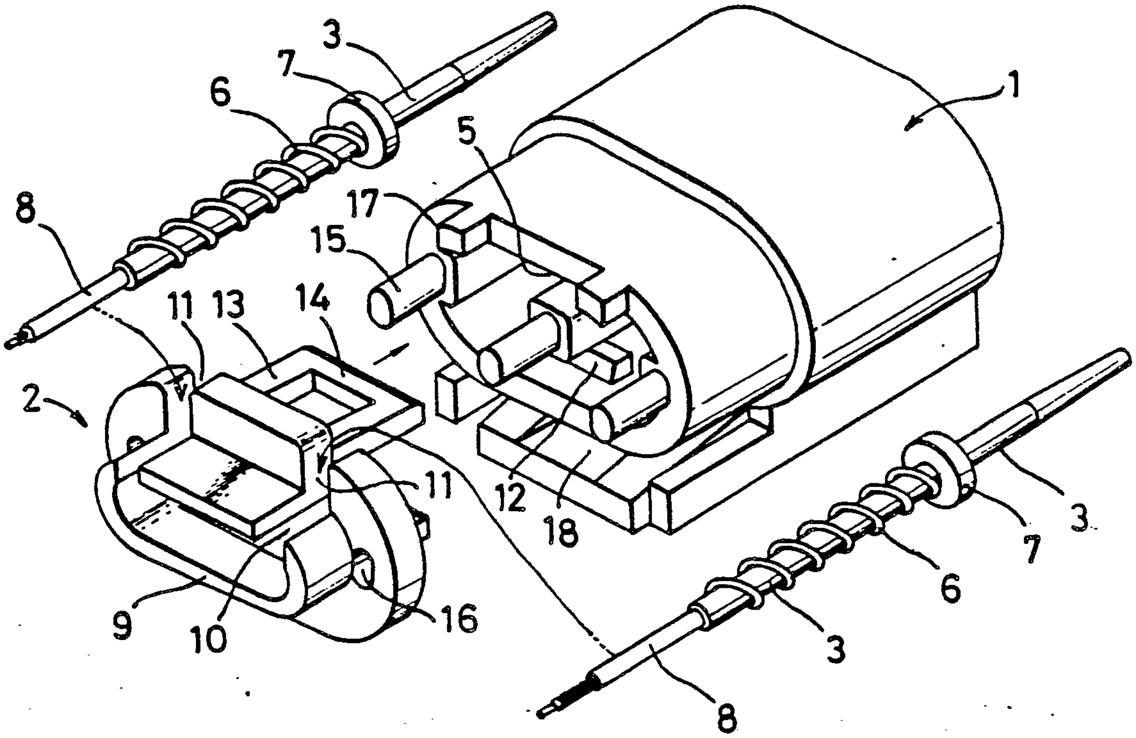

1
2
3
3
3
5
6
6
7
7
8
8
9
10
11
11
12
13
14
15
16
17
18


FIG. 2

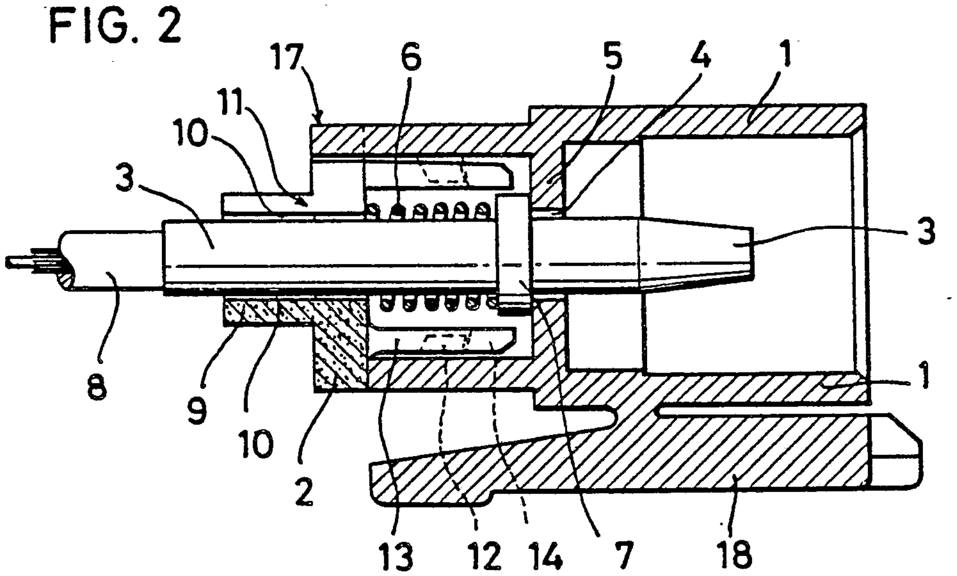

17
6
5
4
1
11
10
3
3
8
9
10
2
1
13
12
14
7
18

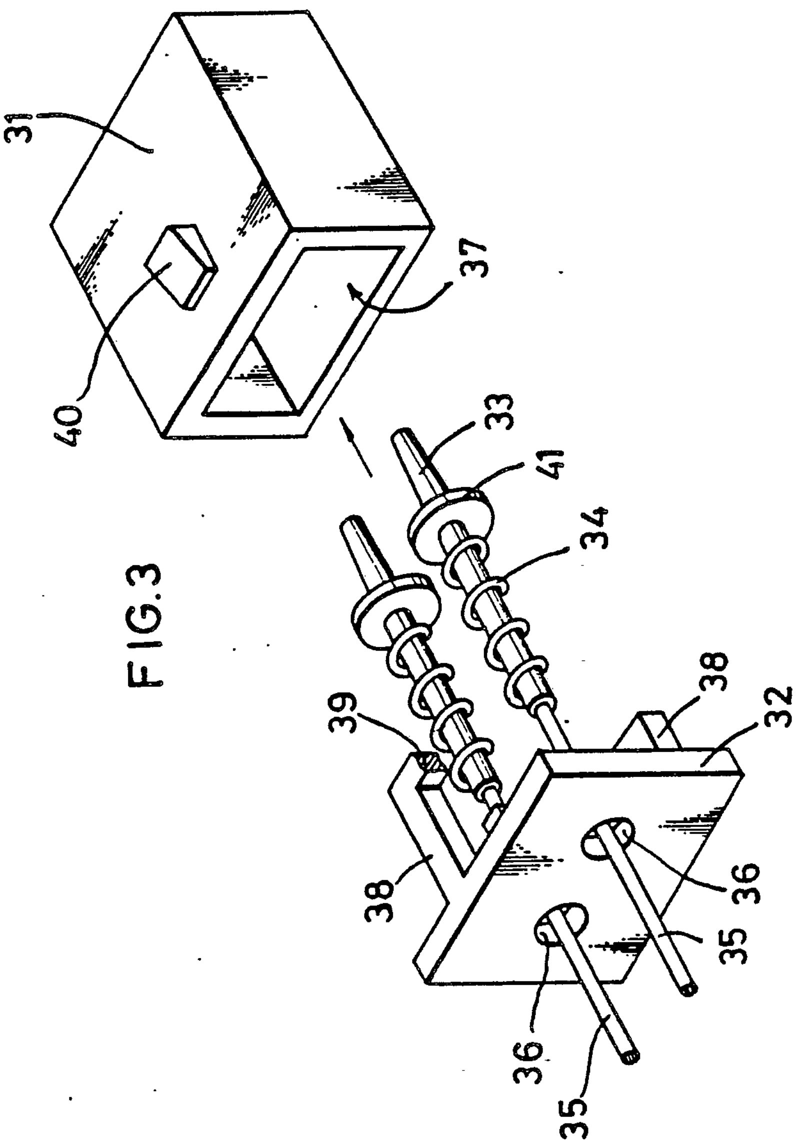


FIG.3